# FASCICULE DE BREVET EUROPEEN

(11) **EP 1 730 454 B1**
(45) Date de publication et mention de la délivrance du brevet: **10.10.2007**
(21) Numéro de dépôt: 05744635.3
(22) Date de dépôt: 29.03.2005
(51) Int. Cl.: F25B 21/00

(54) **GENERATEUR THERMIQUE A MATERIAU MAGNETO-CALORIQUE ET PROCEDE DE GENERATION DE THERMIES**
MAGNETO-KALORISCHES MATERIAL UMFASSENDER WÄRMEGENERATOR UND THERMERZEUGUNGSVERFAHREN
HEAT GENERATOR COMPRISING A MAGNETO-CALORIC MATERIAL AND THERMIE GENERATING METHOD

(30) Priorité: 30.03.2004 FR 0403300
(43) Date de publication de la demande: 13.12.2006
(73) Titulaire: Cooltech Applications, 68280 Andolsheim (FR)
(72) Inventeur: MULLER, Christian, 67000 Strasbourg (FR); DUPIN, Jean-Louis, 68320 Muntzenheim (FR); HEITZLER, Jean-Claude, 68180 Horbourg-Wihr (FR)
(74) Mandataire: Nithardt, Roland
(86) Numéro de dépôt international: PCT/FR2005/000741
(87) Numéro de publication internationale: WO 2005/095872

(56) Documents cités:
- US-B1- 6 595 004
- PATENT ABSTRACTS OF JAPAN vol. 2002, no. 11, 6 novembre 2002 (2002-11-06) & JP 2002 195683 A (DENSO CORP), 10 juillet 2002 (2002-07-10)

## Description

La présente invention concerne un générateur thermique à matériau magnéto-calorique comportant au moins un élément thermique, au moins un élément magnétique destiné à générer un champ magnétique, l'élément thermique étant disposé en regard de l'élément magnétique de manière à pouvoir être soumis à au moins une partie du champ magnétique, le générateur thermique comportant également des moyens de modulation magnétique agencés pour faire varier le champ magnétique reçu par l'élément thermique et des moyens de récupération d'au moins une partie des thermies générées par l'élément thermique soumis à ce champ magnétique variable.

L'invention concerne également un procédé de génération de thermies au cours duquel on soumet au moins un élément thermique à au moins une partie d'un champ magnétique généré par au moins un élément magnétique, on module avec des moyens modulation magnétique le champ magnétique reçu par l'élément thermique et on récupère au moins une partie des thermies générées par l'élément thermique soumis à ce champ magnétique variable.

Les générateurs thermiques à matériau magnéto-calorique connus utilisent les propriétés magnéto-caloriques de certains matériaux tels que le Gadolinium ou certains alliages qui présentent la particularité de s'échauffer sous l'effet d'un champ magnétique et, de se refroidir, à une température inférieure à leur température initiale, après disparition du champ magnétique ou suite à une diminution de ce champ magnétique. En effet, en passant devant le champ magnétique, les moments magnétiques du matériau magnéto-calorique s'alignent, ce qui provoque un réarrangement des atomes générant l'échauffement du matériau magnéto-calorique. Hors du champ magnétique ou en cas de diminution du champ magnétique, le processus s'inverse et le matériau magnéto-calorique se refroidit jusqu'à atteindre une température inférieure à sa température initiale.

Une équipe de chercheurs américains a développé et mis au point un prototype de générateur thermique à matériau magnéto-calorique comportant un disque formé de secteurs thermiques contenant un matériau magnéto-calorique sous forme d'alliage de gadolinium. Ce disque est guidé en rotation continue autour de son axe de manière à faire défiler ses secteurs thermiques dans et en dehors d'un champ magnétique créé par un aimant permanent fixe chevauchant une partie du disque. En regard de l'aimant permanent, le disque passe dans un bloc de transfert thermique comportant deux circuits de fluide caloporteur destinés l'un à transporter les calories, l'autre les frigories générées par les secteurs thermiques soumis alternativement à la présence et à l'absence du champ magnétique. Le bloc de transfert thermique comporte des orifices, débouchant sur le disque en rotation, et permettant le contact entre le fluide caloporteur et les secteurs thermiques en rotation. Malgré la présence de joints tournants, il est très difficile, d'assurer l'étanchéité entre les secteurs thermiques et le bloc de transfert thermique sans pénaliser le rendement global du générateur thermique. De plus, chaque fois qu'un secteur thermique est ou non soumis au champ magnétique et donc s'échauffe ou se refroidit, il faut commuter les entrées et sorties correspondantes au circuit chaud ou au circuit froid. Ce dispositif est donc complexe, peu fiable, d'un rendement limité et n'est pas satisfaisant.

La publication WO-A-03/050456 décrit un générateur thermique sensiblement similaire au précédent et utilisant deux aimants permanents. Ce générateur thermique comporte une enceinte annulaire monobloc délimitant douze compartiments thermiques séparés par des joints et recevant chacun du gadolinium sous forme poreuse. Chaque compartiment thermique est pourvu au minimum de quatre orifices dont un orifice d'entrée et un orifice de sortie reliés à un circuit chaud et un orifice d'entrée et un orifice de sortie reliés à un circuit froid. Les deux aimants permanents sont animés d'un mouvement de rotation continue de sorte qu'ils balayent les différents compartiments thermiques en les soumettant successivement à un champ magnétique. Les calories et/ou frigories émises par les compartiments thermiques sont guidées vers des échangeurs de chaleur par des circuits chaud et froid de fluide caloporteur auxquels ils sont successivement raccordés par l'intermédiaire de plusieurs joints tournants dont la rotation est couplée, par une ou plusieurs courroies, à l'axe d'entraînement en rotation continue des deux aimants. Ce générateur thermique simule ainsi le fonctionnement d'un anneau liquide.

Pour fonctionner, ce générateur thermique nécessite des rotations continues, synchrones et précises des différents joints rotatifs et des aimants permanents. Les impératifs de commutation et d'étanchéité liés à ces rotations rendent ce générateur thermique techniquement difficile et coûteux à réaliser. De plus, le principe de fonctionnement en continu rend les perspectives d'évolution technique de ce générateur thermique très limitées. Le document JP-A-2002 195 683 décrit également un générateur thermique utilisant deux aimants permanents.

La présente invention se propose de pallier ces inconvénients en offrant un générateur thermique à matériau magnéto-calorique efficace, fiable, de conception simple, peu onéreux, faible consommateur d'énergie électrique, ayant un bon rendement, ne nécessitant pas de moyens de synchronisation entre les déplacements des éléments magnéto-caloriques, ne nécessitant pas de moyens de commutation alternatifs aux circuits chaud et froid tels que décrits dans le prototype des chercheurs américains préalablement cité, permettant de limiter considérablement les masses inertes à déplacer pour réaliser la variation de champ magnétique nécessaire à l'obtention de l'effet magnéto-calorique et pouvant être utilisé aussi bien dans des installations industrielles de grande échelle que pour dans applications domestiques.

Dans ce but, l'invention concerne un générateur thermique à matériau magnéto-calorique du genre indiqué en préambule, caractérisé en ce que les moyens de modulation magnétique comportent au moins un élément de modulation magnétique, magnétiquement conducteur, couplé à des moyens de déplacement agencés pour le déplacer alternativement par rapport à l'élément magnétique et à l'élément thermique, entre une position active dans laquelle il est rapproché de l'élément magnétique et de l'élément thermique et agencé pour canaliser au moins la partie du champ magnétique destinée à être reçue par l'élément thermique et une position inactive dans laquelle il est éloigné de l'élément magnétique et/ou de l'élément thermique et agencé pour être sans effet sur cette partie de champ magnétique.

L'élément de modulation magnétique peut être un élément de convergence magnétique réalisé dans un matériau présentant une conductivité magnétique supérieure à celle existant dans le milieu ambiant séparant l'élément magnétique et l'élément thermique, cet élément de convergence magnétique étant agencé pour, en position active, favoriser le passage du champ magnétique en direction de l'élément thermique ayant pour effet d'augmenter le champ magnétique le traversant.

L'élément de modulation magnétique peut également être un élément de divergence magnétique réalisé dans un matériau présentant une conductivité magnétique supérieure à celle de l'élément thermique, cet élément de divergence magnétique ayant au moins une forme apte à contourner l'élément thermique et agencée pour, en position active, dévier au moins une partie du champ magnétique de l'élément thermique ayant pour effet de diminuer le champ magnétique le traversant.

L'élément de modulation magnétique est avantageusement réalisé au moins dans l'un des matériaux choisi dans le groupe comprenant le fer doux, les ferrites, les alliages de fer, de chrome, de vanadium, les composites, les nano-composants, les permalloys.

Selon un mode de réalisation préférentiel, le générateur thermique comporte au moins un élément de convergence magnétique appelé aussi loupe magnétique et au moins un élément de divergence magnétique appelé aussi divergent ou shunt thermique agencés pour permettre alternativement de favoriser le passage du champ magnétique en direction de l'élément thermique et de dévier le champ magnétique de l'élément thermique.

En position active, l'élément de modulation magnétique est avantageusement interposé entre l'élément magnétique et l'élément thermique.

L'élément magnétique comporte de préférence au moins une borne magnétique positive et au moins une borne magnétique négative, l'élément thermique étant disposé entre les bornes magnétiques, et l'élément de modulation magnétique étant, au moins en position active, interposé entre au moins les bornes magnétiques.

De manière avantageuse :
- l'élément de convergence magnétique peut comporter deux pastilles de convergence placées, en position active, de part et d'autre de l'élément thermique entre l'élément thermique et les bornes magnétiques, et/ou
- l'élément de divergence magnétique peut présenter une forme en U ou en C destinée à chevaucher, au moins en position active, l'élément de thermique, entre l'élément thermique et les bornes magnétiques.

Selon une autre manière avantageuse, l'élément de divergence magnétique mj comporte au moins un plot destiné à être disposé, en position active, de manière tangente aux éléments thermique Ti et aux bornes magnétiques, l'entrefer séparant l'élément thermique Ti des bornes magnétiques 40, 41 restant libre. Cet entrefer peut être compris entre 0 mm et 50 mm et de préférence inférieur à 1 mm.

L'élément magnétique peut présenter une forme en U ou en C, sans limitation de forme, destinée à chevaucher ledit élément de modulation magnétique.

Les moyens de déplacement peuvent être agencés pour entraîner l'élément de modulation magnétique selon au moins l'un des déplacements choisi dans le groupe comprenant la rotation continue, la rotation pas à pas, le pivotement alternatif, la translation continue, la translation pas à pas, la translation alternative, une combinaison de ces déplacements.

Les moyens de déplacement sont de préférence couplés à des moyens d'actionnement choisis dans le groupe comprenant un moteur, un vérin, un mécanisme à ressort, un aérogénérateur, un électroaimant, un hydrogénérateur, un mécanisme à force musculaire.

L'élément de modulation magnétique est avantageusement porté par un support couplé aux moyens de déplacement et réalisé dans un matériau magnétiquement isolant choisi dans le groupe comprenant notamment les matériaux synthétiques, le laiton, le bronze, les aluminiums, les céramiques.

Le générateur thermique comporte de préférence au moins un ensemble d'éléments magnétiques, un ensemble d'éléments thermiques chacun destiné à être soumis au champ magnétique d'au moins un des éléments magnétiques, un ensemble d'éléments de modulation magnétique portés par un support couplé aux moyens de déplacement et agencé pour déplacer simultanément les éléments de modulation magnétique pour que chacun soit, par rapport à un élément thermique et à un élément magnétique donnés, alternativement en position active et en position inactive.

Selon un premier mode de réalisation, le support comporte au moins un plateau sensiblement circulaire, mobile en rotation autour de son axe, les éléments thermiques étant disposés en anneau et les éléments magnétiques formant au moins une paire de couronnes définissant les bornes magnétiques positive et négative.

Dans cette configuration, le plateau est de préférence pourvu d'une gorge définissant l'intervalle séparant les pastilles de convergence des éléments de convergence magnétique entre-elles et/ou l'ouverture de la forme en U ou en C des éléments de divergence magnétique. Cette gorge peut être disposée axialement et sensiblement parallèlement à l'axe du plateau ou radialement et sensiblement perpendiculairement à l'axe du plateau.

Selon un second mode de réalisation, le support comporte au moins une barre sensiblement rectiligne, mobile en translation, les éléments thermiques étant disposés selon au moins une ligne portée par une traverse et les éléments magnétiques formant au moins une paire de rangées définissant les bornes magnétiques positive et négative.

Dans cette configuration, les éléments thermiques peuvent être disposés selon deux lignes sensiblement parallèles portées par des traverses reliées et définissant un cadre.

De manière avantageuse, les éléments magnétiques peuvent être formés d'une pièce unique.

L'élément magnétique est de préférence choisi dans le groupe comprenant un assemblage magnétique, un aimant permanent, un électro-aimant, un aimant supraconducteur, un électro-aimant supra-conducteur, un supra-conducteur.

Selon un mode de réalisation particulier, l'élément magnétique et l'élément thermique sont fixes et seul l'élément de modulation magnétique est mobile.

De manière avantageuse, les moyens de récupération comportent au moins l'un des éléments choisis dans le groupe comprenant un circuit de transport contenant un fluide caloporteur, des moyens de circulation de ce fluide caloporteur, un échangeur thermique.

L'invention concerne également un procédé de génération de thermies du genre indiqué en préambule, caractérisé en ce que pour faire varier le champ magnétique reçu par l'élément thermique, on utilise au moins un élément de modulation magnétique, magnétiquement conducteur, que l'on déplace entre au moins une position active dans laquelle il est rapproché de l'élément magnétique et de l'élément thermique et agencé pour canaliser au moins la partie du champ magnétique destinée à être reçue par l'élément thermique et une position inactive dans laquelle il est éloigné de l'élément magnétique et/ou de l'élément thermique et agencé pour être sans effet sur cette partie de champ magnétique.

De manière préférentielle, on utilise au moins un élément magnétique définissant au moins une borne positive et une borne négative entre lesquelles on dispose l'élément thermique et en ce qu'en position active, on interpose l'élément de modulation magnétique entre au moins les bornes magnétiques de l'élément magnétique.

La présente invention et ses avantages apparaîtront mieux dans la description suivante de plusieurs modes de réalisation, donnée à titre d'exemples non limitatifs en référence aux dessins annexés, dans lesquels :
- la figure 1 est une vue en perspective d'un générateur thermique partiellement assemblé selon un premier mode de réalisation de l'invention,
- les figures 2A-2C sont des vues en perspective sensiblement similaires à la précédente dans lesquelles le générateur thermique est représenté à différents stades d'assemblage,
- la figure 3A est une vue de dessus du générateur thermique de la figure 2A et les figures 3B et 3C des vues selon le plan de coupe AA de la figure 3A,
- les figures 4A et 4B sont respectivement des vues de dessous et en perspective de l'élément de modulation magnétique de la figure 3A et la figure 4C une vue en coupe selon le plan de coupe BB de la figure 4A,
- la figure 5A est une vue similaire à la figure 3A du générateur thermique de l'invention selon un second mode de réalisation, les figures 5B et 5C étant des vues selon le plan de coupe CC de la figure 5A,
- les figures 6A et 6B sont respectivement des vues de dessous et en perspective de l'élément de modulation magnétique de la figure 5A, la figure 6C étant une vue en coupe selon le plan de coupe DD de la figure 6A,
- les figures 7A-7D sont respectivement des vues en perspective, de dessus et en coupe du générateur thermique de l'invention selon une variante de réalisation, la figure 7D étant une vue en perspective de l'élément de modulation magnétique de la figure 7C,
- les figures 8A et 8B sont respectivement des vues en coupe et en perspective d'une autre variante de réalisation de l'élément de modulation magnétique,
- les figures 9A et 9B sont respectivement des vues de dessus et en perspective d'un troisième mode de réalisation d'un générateur thermique selon l'invention, et
- les figures 9C et 9D sont des vues en coupe du dispositif des figures respectivement selon les plans de coupe EE et FF du générateur de la figure 9A, et,
- la figure 10 représente en section un quatrième mode de réalisation d'un générateur thermique selon l'invention.

De manière connue, un générateur thermique à matériau magnéto-calorique, comporte des éléments thermiques Ti, soumis au champ magnétique généré par des éléments magnétiques Gi. Les éléments thermiques Ti contiennent un matériau magnéto-calorique tel que par exemple du gadolinium (Gd), un alliage de gadolinium contenant par exemple du silicium (Si), du germanium (Ge), du fer (Fe), du magnésium (Mg), du phosphore (P), de l'arsenic (As) ou tout autre matériau ou alliage magnéto-calorique équivalent. De manière générale, le matériau magnéto-calorique peut se présenter sous la forme d'un bloc, d'une pastille, de poudre, d'un agglomérat de morceaux ou de toute autre forme adaptée et peut être à base d'un matériau seul ou d'une combinaison de plusieurs matériaux magnéto-caloriques.

Les éléments magnétiques Gi peuvent comporter un ou plusieurs aimants permanents pleins, frittés ou feuilletés, associés à un ou plusieurs matériaux magnétisables concentrant et dirigeant les lignes de champ magnétique de l'aimant permanent. Les matériaux magnétisables peuvent contenir du fer (Fe), du cobalt (Co), du Vanadium (V), du fer doux, un assemblage de ces matériaux ou tout matériau équivalent. Tout autre type d'aimant équivalent tel qu'un assemblage magnétique, un électro-aimant, un aimant supraconducteur, un électro-aimant supra-conducteur, un supraconducteur peut bien entendu être utilisé.

Par souci de simplification, dans la suite de la description on appellera "générateur", le générateur thermique à matériau magnéto-calorique selon l'invention.

Avant d'entrer dans les détails constructifs de différents modes de réalisation du générateur selon l'invention, son principe général de fonctionnement est expliqué ci-après en référence à l'ensemble des figures.

Ce générateur 10-14 comporte des éléments de modulation magnétique Mj, mj réalisés en matériau magnétiquement conducteurs tel que par exemple du fer doux, des ferrites, des alliages de fer, de chrome, de vanadium, des composites, des nano-composants, des permalloys ou en tout autre matériau présentant des caractéristiques similaires. Chaque élément de modulation magnétique Mj, mj est couplé à des moyens de déplacement (non représentés) pour être mobile de manière alternative entre une position active et une position inactive par rapport aux éléments thermiques Ti et aux éléments magnétiques Gi dans le but de créer une variation du champ magnétique reçu par les éléments thermiques Ti.

En position active, chaque élément de modulation magnétique Mj, mj est rapproché d'un élément magnétique Gi et d'un l'élément thermique Ti pour favoriser le passage du champ magnétique émis par l'élément magnétique Gi au travers de l'élément de modulation magnétique Mj, mj en direction de l'élément thermique Ti, générant une augmentation du champ magnétique reçu par l'élément thermique Ti.

En position inactive, l'élément de modulation magnétique Mj, mj est éloigné de l'élément magnétique Gi et/ou de l'élément thermique Ti pour ne plus avoir d'impact notable sur le champ magnétique émis par l'élément magnétique Gi générant une diminution ou variation du champ magnétique reçu par l'élément thermique Ti.

Il est bien entendu que la position active de l'élément de modulation magnétique Mj, mj par rapport à un couple d'éléments magnétique Gi et thermique Ti peut correspondre à la position inactive du même élément de modulation magnétique Mj, mj par rapport à un couple d'éléments magnétique Gi+1 et thermique Ti+1, ces derniers étant par exemple adjacents aux précédents.

Les éléments de modulation magnétique peuvent être des éléments de convergence magnétique Mj réalisés dans un matériau présentant une conductivité magnétique supérieure à celle existant entre les éléments magnétiques Gi et les éléments thermiques Ti, par exemple à celle de l'air. En position active, ces éléments de convergence magnétique Mj favorisent le passage du champ magnétique, au travers d'eux puis au travers des éléments thermiques Ti disposés en regard. Ainsi, lorsque l'élément de convergence magnétique Mj est approché d'un couple d'éléments magnétique Gi et thermique Ti, en position active, l'élément thermique Ti est soumis à un champ magnétique supérieur à celui subit lorsque l'élément de convergence magnétique Mj est éloigné du couple d'éléments magnétique Gi et thermique Ti, en position inactive.

Les éléments de modulation magnétique peuvent également être des éléments de divergence magnétique mj, réalisés dans un matériau présentant une conductivité magnétique supérieure à celle des éléments thermiques Ti et présentant chacun une forme apte à contourner l'élément thermique Ti. En position active, ces éléments de divergence magnétique mj, favorisent le passage du champ magnétique au travers d'eux, le champ magnétique contournant l'élément thermique Ti disposé en regard. Ainsi, lorsque l'élément de divergence magnétique mj est rapproché d'un couple d'éléments magnétique Gi et thermique Ti, en position active, l'élément thermique Ti est soumis à un champ magnétique nul ou au moins inférieur à celui subit lorsque l'élément de divergence magnétique mj est éloigné du couple d'éléments magnétique Gi et thermique Ti, en position inactive.

Comme détaillé plus loin, il est bien entendu possible de cumuler l'efficacité des deux types d'éléments de modulation magnétique Mj, mj en utilisant de manière alternative, pour chaque paire d'éléments magnétique Gi et thermique Ti, un élément de divergence magnétique mj et un élément de convergence magnétique Mj.

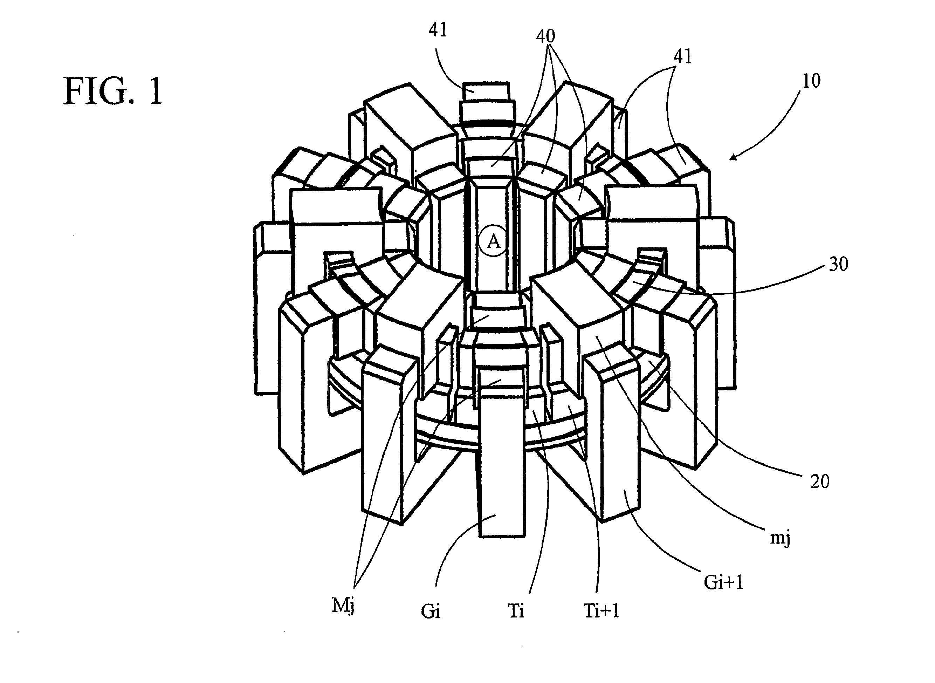

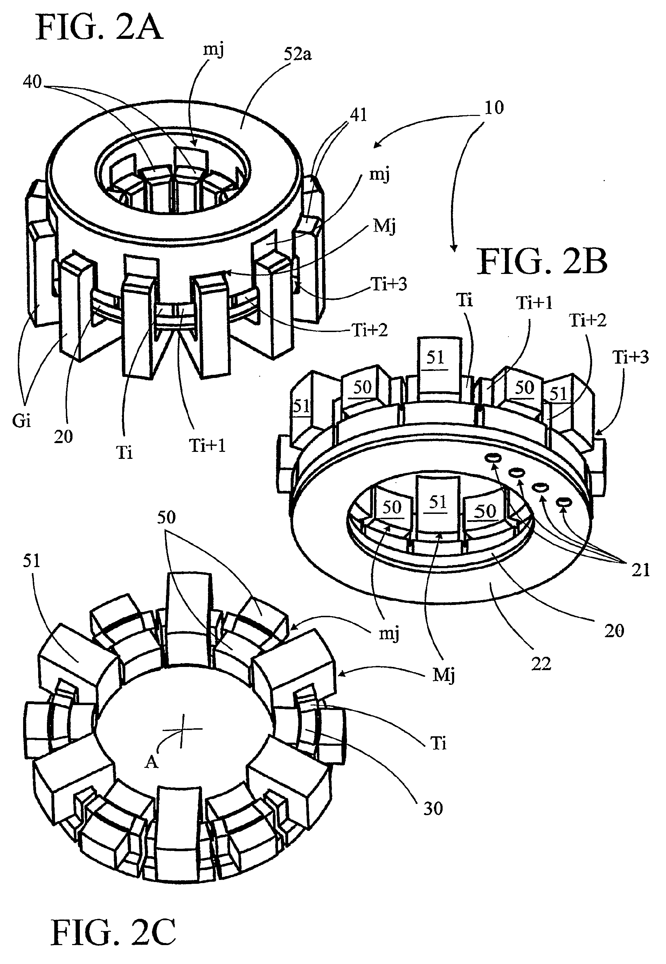

En référence aux figures 1 à 6, et selon un premier mode de réalisation, le générateur 10-11 comporte un ensemble de douze éléments thermiques Ti disposés en cercle de centre A sur une plaque d'interface 20, annulaire, pour former un anneau thermique. Chaque élément thermique Ti comporte un bloc de matériau magnéto-calorique 30 et est traversé par deux conduits (non représentés), débouchants par des orifices d'entrée chaud et froid et des orifices de sortie chaud et froid. Ces conduits sont destinés à recevoir respectivement le fluide caloporteur à réchauffer et le fluide caloporteur à refroidir.

La plaque d'interface 20 est réalisée en un matériau mécaniquement rigide et thermiquement isolant par exemple un matériau composite, un matériau synthétique ou tout autre matériau équivalent. L'étanchéité est assurée par une plaque d'étanchéité 22 réalisée dans un matériau mécaniquement rigide et thermiquement isolant, par exemple un matériau composite, un matériau synthétique ou tout autre matériau équivalent. Elle comporte quatre orifices 21 dont un orifice d'arrivée circuit froid, un orifice d'évacuation circuit froid, un orifice d'arrivée circuit chaud et un orifice d'évacuation circuit chaud. Ces orifices 21 sont destinés à être reliés par des moyens de raccordement et de distribution traditionnels (non représentés) à un circuit externe chaud et à un circuit externe froid (non représentés). Les éléments thermiques Ti étant fixes, le raccordement des circuits externes froid et chauds aux orifices 21 d'arrivée et d'évacuation est réalisé par de simples raccords hydrauliques rapides ou non.

Les circuits externes chaud et froid sont par exemple formés de conduits rigides, semi-rigides ou souples dans lesquels les fluides caloporteurs circulent et raccordés chacun à un ou plusieurs échangeurs thermiques (non représentés) ou tout autre moyen équivalent permettant la récupération des calories et des frigories. Comme décrit plus loin, cet échangeur thermique 10-11 permet ainsi, de récupérer simultanément les calories et les frigories émises par les éléments thermiques Ti de l'anneau thermique.

La circulation des fluides caloporteurs est par exemple assurée par des moyens de circulation forcée ou libre (non représentés) tels que par exemple une pompe ou tout autre moyen équivalent. Les fluides caloporteurs utilisés sont choisis notamment en fonction de la plage de température voulue. On utilise par exemple de l'eau pure pour des températures positives et de l'eau additionnée d'antigel pour des températures négatives. Pour des températures très basses, un gaz tel que l'hélium peut être utilisé comme fluide caloporteur.

Les orifices 21 d'arrivée et d'évacuation de chacun des circuits chaud et froid sont reliés entre eux par des canalisations (non représentées) chaudes et froides, internes à la plaque d'interface 20 et prévues débouchantes en regard respectivement des orifices d'entrée et de sortie des éléments thermiques Ti. Ainsi, la canalisation chaude relie les orifices d'arrivée et d'évacuation du circuit chaud aux orifices d'entrée et de sortie chauds. De même, la canalisation froide relie les orifices d'arrivée et d'évacuation du circuit froid aux orifices d'entrée et de sortie froids. Ces canalisations peuvent être prévues pour relier les éléments thermiques Ti en parallèle ou en série. Elles peuvent être réalisées par exemple par usinage ou par moulage.

Le générateur 10-11 comporte douze éléments magnétiques Gi ayant chacun une forme en U ou en C définissant une borne magnétique positive 40 et une borne magnétique négative 41. Ces éléments magnétiques Gi sont disposés à distance en cercle concentrique au centre A de manière à chevaucher les éléments thermiques Ti de l'anneau thermique. Les éléments magnétiques Gi peuvent bien entendu avoir toute autre forme adaptée.

En référence aux figures 1 à 4C, les ouvertures des formes en U ou en C des éléments magnétiques Gi sont orientées axialement, sensiblement parallèlement à l'axe du cercle passant par A et défini par les éléments magnétiques Gi, de manière à définir, par rapport à l'anneau thermique, une couronne magnétique extérieure, par exemple négative, et une couronne magnétique intérieure, par exemple positive, ou inversement, ou une combinaison de paires de bornes positives ou négatives sans ordre particulier. Ainsi, chaque élément thermique Ti est disposé entre une borne magnétique positive 40 et une borne magnétique négative 41.

Les moyens de modulation magnétique comportent six éléments de convergence magnétique Mj et six éléments de divergence magnétique mj disposés en cercle de centre A, en alternance et portés par un support 52a. Les éléments de convergence magnétique Mj comportent deux pastilles de convergence 50 disposées en regard l'une de l'autre et séparées par un intervalle suffisant pour recevoir un élément thermique Ti sans contact entre ces éléments thermiques Ti et les bornes magnétiques 40, 41 qui les encadrent. Les éléments de divergence magnétique mj définissent chacun une forme 51 en U ou en C chevauchant certains éléments thermiques Ti, entre ces éléments thermiques Ti et les bornes magnétiques 40, 41 qui les encadrent.

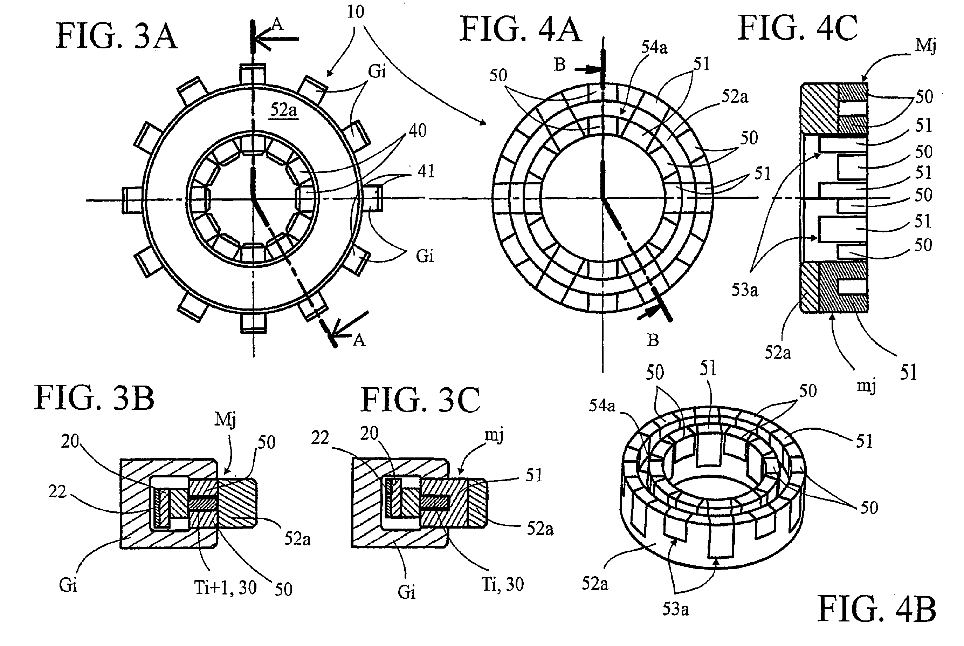

Dans cet exemple, les éléments de convergence magnétique Mj et de divergence magnétique mj sont disposés de manière alternative sur le support 52a. Ainsi, dans une position donnée, les éléments de convergence magnétique Mj se trouvent dans l'environnement immédiat d'un élément thermique Ti, Ti+2 sur deux et les éléments de divergence magnétique mj se trouvent dans l'environnement immédiat d'un élément thermique Ti+1, Ti+3 sur deux. Le support comporte un plateau 52a sensiblement circulaire, coaxial aux couronnes magnétiques et à l'anneau thermique. Les pastilles de convergence 50 et les formes de divergence 51 en U ou en C sont intégrées au plateau 52 qui comporte à cet effet des logements 53a (Cf. figure 4B, 4C) les recevant et une rainure 54a (Cf. figures 4A, 4B) définissant les intervalles dans lesquels les éléments thermiques Ti circulent librement et sans contact. Ce plateau 52a est réalisé dans un matériau magnétiquement isolant tel que par exemple les matériaux synthétiques, le laiton, le bronze, les aluminiums, les céramiques, etc. Il est couplé à des moyens de déplacement (non représentés) pour être mobile en rotation autour de son axe passant par A.

Les moyens de déplacement sont par exemple couplés à des moyens d'actionnement tel qu'un moteur, un vérin, un mécanisme à ressort, un aérogénérateur, un électroaimant, un hydrogénérateur ou tout autre actionneur adapté. Ils entraînent le plateau 52a en déplacement, par exemple en rotation continue, en rotation pas à pas, en pivotement alternatif ou en toute combinaison de ces déplacements.

Le fonctionnement du générateur 10 peut être décomposé en deux étapes réalisées de manière continue, pas à pas ou alternativement en fonction des moyens de déplacement utilisés. Les deux étapes sont, à titre d'exemple, décrites ci-après de manière séquentielle. Il est bien entendu que le passage d'une étape à l'autre peut être progressif On considère de manière arbitraire que les éléments magnétiques Gi émettent en permanence leur champ magnétique.

Lors de la première étape et de manière simultanée :
1) Les éléments de convergence magnétique Mj disposés entre chaque élément thermique Ti, Ti+2 et les éléments magnétiques Gi correspondants concentrent les lignes des champs magnétiques générés par ces éléments magnétiques Gi pour favoriser leur passage au travers d'eux et des éléments thermiques Ti, Ti+2. Ainsi, les éléments de convergence magnétique Mj sont en position active par rapport aux éléments thermiques Ti, Ti+2 qui reçoivent une quantité de champ magnétique supérieure à celle qu'ils auraient reçue en l'absence de ces éléments de convergence magnétique Mj. Par ailleurs, ces mêmes éléments de convergence magnétique Mj sont en position inactive par rapport aux éléments thermiques T1+1 et T1+3 adjacents pour lesquels ils n'ont pas d'influence par rapport aux champs magnétiques auxquels ils sont soumis. Les éléments thermiques Ti, Ti+2 soumis à l'augmentation de champ magnétique s'échauffent. Ils transmettent leurs calories au fluide caloporteur chaud du circuit chaud vers les échangeurs de calories.
2) Les éléments de divergence magnétique mj disposés entre chaque élément thermique Ti+1, Ti+3 et les éléments magnétiques Gi correspondants divergent et dévient le long de leur forme en U ou en C les lignes les champs magnétiques générés par ces éléments magnétiques Gi qui contournent les éléments thermiques Ti+1, Ti+3. Ainsi, les éléments de divergence magnétique mj sont en position active par rapport aux éléments thermiques Ti+1 et Ti+3 qui reçoivent une quantité de champ magnétique quasiment inexistante et, en tout état de cause nettement inférieure à celle qu'ils auraient reçue en l'absence des éléments de convergence magnétique mj. Par ailleurs, ces mêmes éléments de divergence magnétique mj sont en position inactive par rapport aux éléments thermiques Ti, Ti+2 adjacents pour lesquels ils n'ont pas d'influence par rapport aux champs magnétiques auxquels ils sont soumis. Les éléments thermiques Ti, Ti+2 soumis à la réduction de champ magnétique se refroidissent et transmettent leurs frigories au fluide caloporteur froid du circuit froid vers les échangeurs de thermies.

Ainsi, de manière simultanée on obtient :
- une convergence magnétique vers les éléments thermiques Ti, Ti+2 qui s'échauffent par l'intermédiaire des éléments de convergence magnétique Mj, et
- une divergence magnétique par rapport aux éléments thermiques Ti+1, Ti+3 qui se refroidissent.

Pour passer de la première à la seconde étape, les moyens de déplacement entraînent le plateau 52a d'un pas correspondant à l'entraxe séparant deux éléments thermiques Ti, Ti+1 adjacents de manière à amener ;
- les éléments de convergence magnétique Mj entre les éléments thermiques Ti+1, Ti+3 et les éléments magnétiques Gi correspondants, et
- les éléments de divergence magnétique mj entre les éléments thermiques Ti, Ti+2 et les éléments magnétiques Gi correspondants.
Les éléments thermiques Ti+1, Ti+3 soumis à une augmentation de champ magnétique s'échauffent et transmettent leurs calories et les éléments thermiques Ti, Ti+2 soumis à une réduction de champ magnétique se refroidissent et transmettent leurs frigories.

On passe ensuite de la seconde étape à une nouvelle étape par rotation du plateau 52a et ainsi de suite, chaque élément thermique ti, Ti+1, Ti+2, Ti+3 étant ainsi alternativement soumis à l'augmentation et à la diminution de champ magnétique provoquant une variation de champ magnétique favorable pour produire des frigories et/ou des calories.

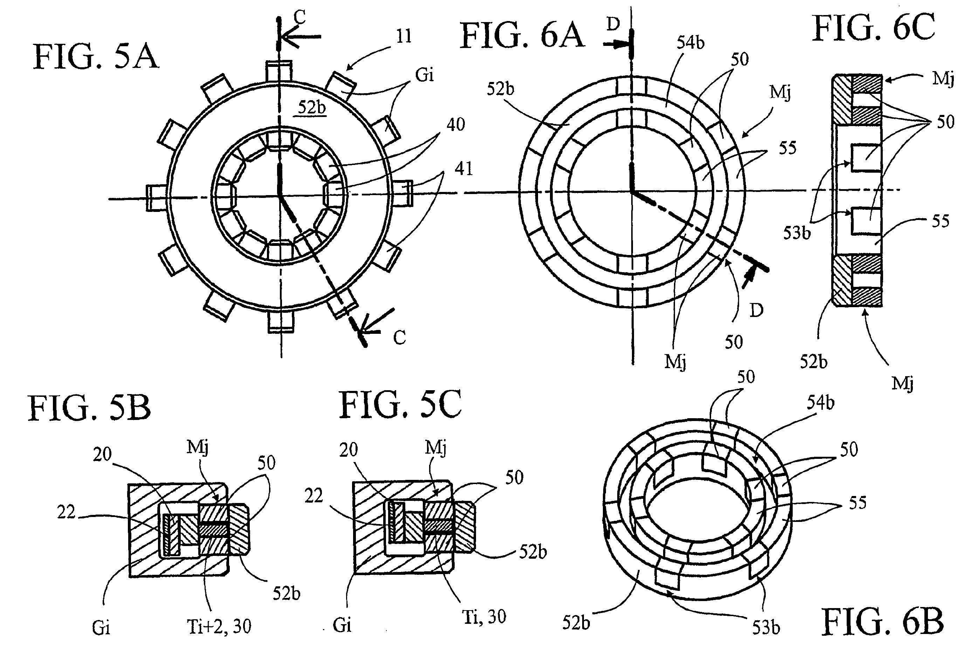

En référence aux figures 5 et à 6, le générateur 11 se différencie du précédent par le fait que les moyens de modulation magnétique comportent six éléments de convergence magnétique Mj mais pas d'éléments de divergence magnétique. Les éléments de convergence magnétique Mj sont disposés de manière sensiblement identique à l'exemple précédent, le plateau 52b étant plein entre les éléments de convergence magnétique Mj.

Le fonctionnement de ce générateur 11 est sensiblement similaire à celui du générateur 10 précédent. Un élément thermique Ti, Ti+2 sur deux est soumis par l'intermédiaire d'un élément de convergence magnétique Mj, à une augmentation de champ magnétique. Les autres éléments thermiques (non représentés) sont soumis à une diminution de champ magnétique, ce dernier étant diffus et gêné par la forme en U du plateau 52b dont les branches 55 (Cf. figures 6A, 6B et 6C) en matériau magnétiquement isolant ou neutre s'interposent entre les éléments magnétiques Gi et les éléments thermiques Ti.

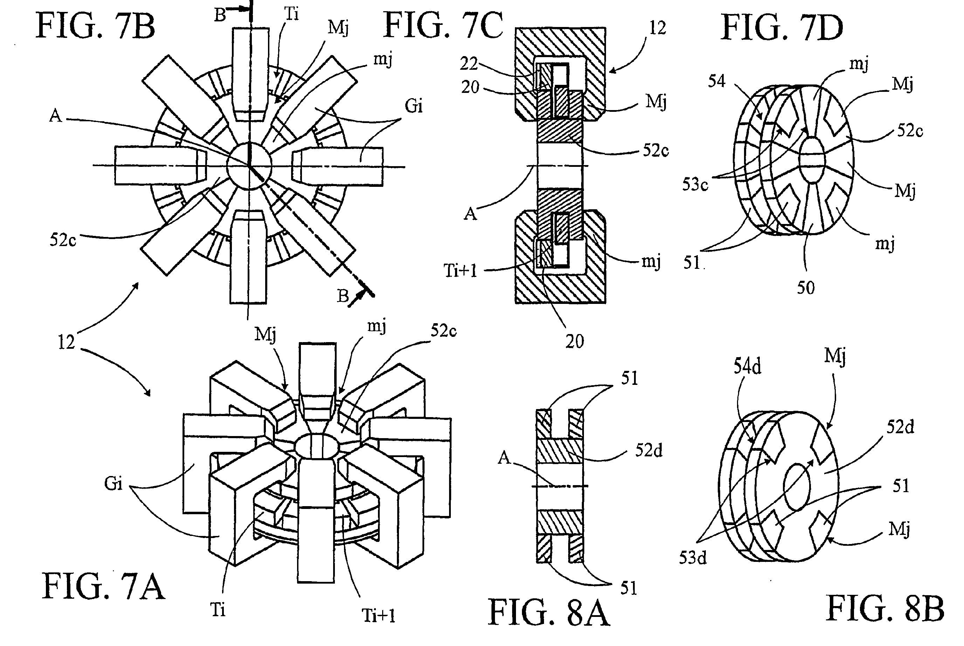

En référence aux figures 7 et 8, les générateurs 12 sont sensiblement identiques aux précédents. Ils s'en différencient notamment par le fait qu'ils comportent huit éléments magnétiques Gi et huit éléments thermiques Ti. De plus, les ouvertures des formes en U ou en C des éléments magnétiques Gi sont orientées radialement et sensiblement perpendiculairement à l'axe passant par A et définissent deux couronnes magnétiques de diamètre sensiblement égal et de centre A. Aussi, les rainures 54c-d des plateaux 52c-d sont prévues radiales. Le fonctionnement de ces générateurs 12 est sensiblement similaire à celui des générateurs précédents.

Dans l'exemple des figures 7A-7D, les moyens de modulation magnétique comportent quatre éléments de convergence magnétique Mj et quatre éléments de divergence magnétique mj disposés de manière alternative et portés par le plateau 52c.

Dans l'exemple des figures 8A et 8B, les moyens de modulation magnétique comportent quatre éléments de convergence magnétique Mj mais pas d'éléments de divergence magnétique. Les éléments de convergence magnétique Mj comportent des formes en U ou en C dont les branches définissent des pastilles de convergence 51 disposées de manière sensiblement identique à l'exemple précédent, le plateau 52d étant plein entre ces éléments de convergence magnétique Mj pour s'interposer au champ magnétique.

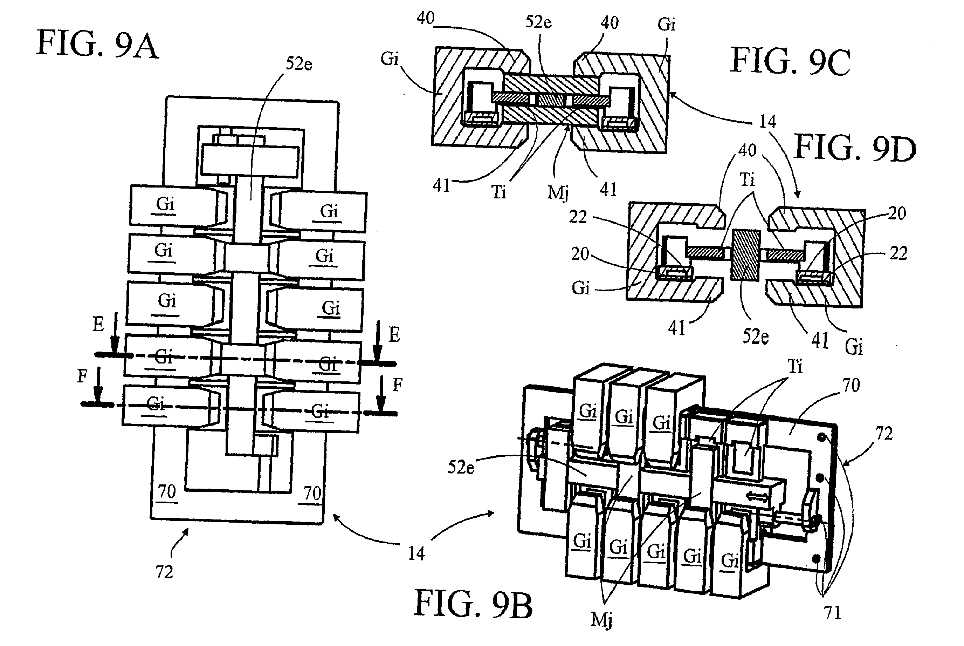

Les figures 9A-9D illustrent un autre mode de réalisation du générateur 14 selon l'invention. Ce générateur 14 comporte dix éléments thermiques Ti disposés selon deux lignes portées par des traverses 70 reliées et formant un cadre 72. Ce cadre 72 comporte des orifices 71 d'arrivée et d'évacuation des circuits froid et chaud reliés comme précédemment décrit par des canalisations non représentées.

Ce générateur 14 comporte trois éléments de modulation magnétique Mj portés par un support comportant une barre 52e sensiblement rectiligne prévue entre les lignes d'éléments thermiques Ti. Cette barre 52e est réalisée en un matériau mécaniquement rigide et thermiquement isolant par exemple un matériau composite, un matériau synthétique, un matériau composite ou tout autre matériau équivalent. Les éléments de modulation magnétique Mj sont disposés, de part et d'autre sur la barre 52e, de manière à chevaucher une paire d'éléments thermiques Ti, Ti+2 ou Ti+1, Ti+3 sur deux.

Dans cet exemple, les éléments de modulation magnétique sont des éléments de convergence magnétique Mj. Il est bien entendu possible de prévoir un générateur sensiblement similaire et comportant également des éléments de divergence magnétique.

La barre 52e est couplée aux moyens de déplacement pour être mobile en translation et ainsi déplacer les éléments de convergence magnétique Mj par rapport aux éléments thermiques Ti. Cette translation peut être continue, pas à pas, alternative. Ce générateur 14 comporte dix éléments magnétiques Gi en forme de U, de C ou similaire, alignés en rangées, chaque rangée définissant des bornes magnétiques positives 40 et négatives 41 (Cf. figure 9C et 9D), chevauchant les éléments thermiques Ti par-dessus ou non les éléments de convergence magnétique Mj.

Le fonctionnement de ce générateur 14 est sensiblement similaire à celui du générateur 11, des figures 6 et 8. Il s'en différencie néanmoins par le fait qu'entre deux éléments de convergence magnétique Mj, le champ magnétique n'est pas stoppé ou limité par la barre 52e tel qu'il l'était par le plateau 52b, 52d, mais simplement par l'air et/ou le milieu ambiant compris entre les éléments magnétiques Gi et les éléments thermiques Ti. La variation de champ magnétique est ainsi obtenue par la différence de conduction magnétique entre l'air et/ou le milieu ambiant et le matériau magnétiquement conducteur des éléments de convergence magnétique Mj.

Dans les exemples décrits, les éléments magnétiques Gi et les éléments thermiques Ti sont fixes. Il est bien entendu que, si nécessaire pour le fonctionnement général d'une installation, les uns et/ou les autres peuvent être prévus mobiles.

Selon une variante de réalisation non représentée, les éléments magnétiques peuvent être formés d'une pièce unique. Dans le cas des générateurs circulaires, il peut s'agir de couronnes extérieure et intérieure pleines et/ou d'un moyeu intérieur.

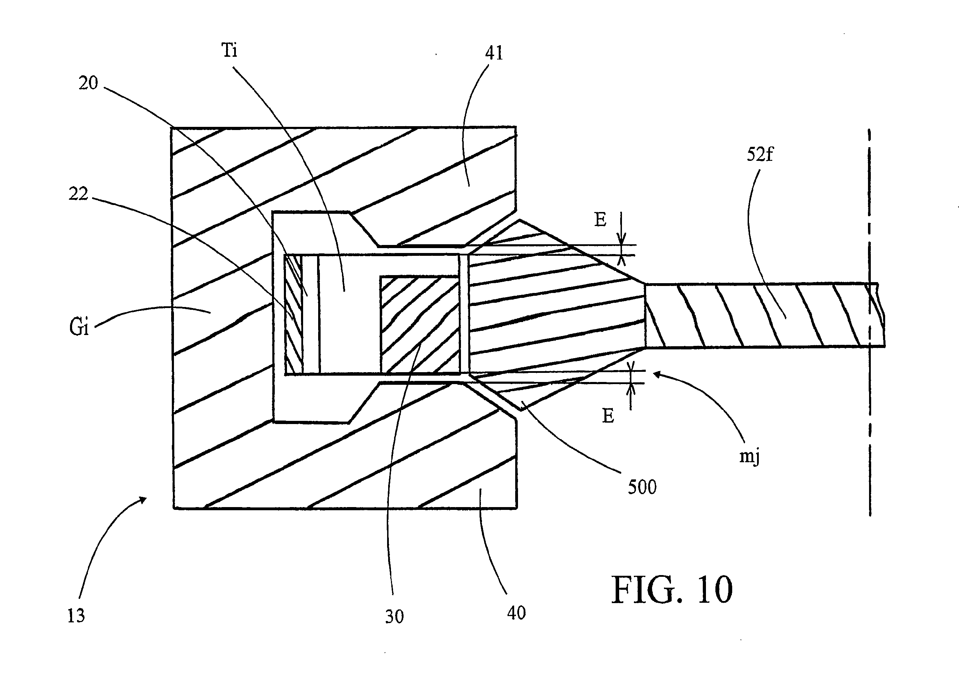

Selon un autre mode de réalisation représenté par la figure 10, les éléments de modulation magnétique sont disposés de manière tangente aux éléments magnétiques et aux éléments thermiques et non disposés entre-eux. Dans cet exemple, le générateur 13 comporte des éléments de divergence magnétique mj portés par un plateau 52f d'axe A, mobile en rotation et alternant avec des zones pleines du plateau 52f Chaque élément de divergence magnétique mj comporte au moins un plot 500 pourvu de formes complémentaires à celles de l'élément thermique Ti et des bornes magnétiques 40, 41 de manière à pouvoir, en position active, s'interposer entre les bornes magnétiques 40, 41 sans pour autant s'interposer entre les bornes magnétiques 40, 41 et l'élément thermique Ti. En position active, l'élément thermique Ti est disposé de manière tangente aux éléments thermique Ti et aux bornes magnétiques 40, 41. Les éléments thermiques sont séparés des bornes magnétiques 40, 41 par un entrefer E compris entre 0 mm et 50 mm et de préférence inférieur à 1 mm. Cet entrefer E est laissé libre en position active et en position inactive et autorise le passage du champs magnétique entre les bornes magnétiques 40, 41 et l'élément thermique Ti.

Le fonctionnement de ce générateur 13 est sensiblement similaire à celui du générateur 11 précédemment décrit, à la différence près qu'il s'agit ici d'éléments de divergence magnétique mj et non de convergence magnétique. En position inactive, l'élément de divergence magnétique mj est éloigné de l'élément thermique Ti et des bornes magnétiques 40, 41. De ce fait, le champ magnétique passe librement au travers de l'élément thermique Ti qui s'échauffe. En position active, l'élément de divergence magnétique mj est tangent aux élément thermique Ti et aux bornes magnétiques 40, 41. L'élément de divergence magnétique mj étant magnétiquement plus conducteur que l'air ou le milieu ambiant de l'entrefer E, le champ magnétique est dévié et évite l'élément thermique Ti qui se refroidit.

Ce générateur thermique 10-14 peut être couplé à d'autres générateurs similaires ou non avec lesquels il peut être relié en série et/ou en parallèle et/ou une combinaison série/parallèle pour augmenter les capacités thermiques d'une installation sans en compliquer ni le fonctionnement ni l'architecture, le déplacement des éléments de modulation magnétique étant aisé à réaliser. Chaque générateur 10-14 peut comporter un nombre d'élément thermique, d'éléments magnétiques et/ou d'éléments de modulation magnétique différents de ceux décrits, ce nombre n'étant pas limité.

Ce générateur 10-14 permet ainsi, de manière simple de produire des frigories et/ou des calories puisque seuls les éléments de modulation magnétique doivent être déplacés. Ces frigories et calories peuvent être utilisées pour chauffer, refroidir, tempérer, climatiser un local, un appareil, un lieu et être utilisées tant dans des applications industrielles que domestiques. La construction particulière de ce générateur 10-14 permet de s'affranchir de tout problème d'étanchéité dans les circuits thermiques et de limiter considérablement les masses inertes à déplacer pour réaliser la variation de champ magnétique nécessaire pour obtenir l'effet magnéto-calorique.

Dans les exemples décrits, le milieu ambiant est de l'air. Il est bien entendu que le générateur 10-14 peut être utilisé dans tout autre type de milieu ambiant adapté. Il est également possible d'utiliser un générateur 10-14 comportant un milieu ambiant interne spécifique tel qu'un gaz, ce générateur 10-14 étant disposé dans un milieu ambiant externe différent, par exemple un autre gaz ou tout autre fluide. Dans ce cas, les deux milieux ambiants pourront être isolés l'un de l'autre par exemple par un carter.

Cette description met bien en évidence que le générateur 10-14 selon l'invention permet de répondre aux buts fixés en proposant un générateur 10-14 efficace, de conception, de fonctionnement et d'asservissement simples et donc moins cher à réaliser et à utiliser que les générateurs traditionnels. Il permet de plus de limiter considérablement les masses inertes à déplacer pour réaliser la variation de champ magnétique nécessaire à l'obtention de l'effet magnéto-calorique.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Générateur thermique (10-14) à matériau magnéto-calorique comportant au moins un élément thermique (Ti), au moins un élément magnétique (Gi) destiné à générer un champ magnétique, ledit élément thermique (Ti) étant disposé en regard dudit élément magnétique (Gi) de manière à pouvoir être soumis à au moins une partie dudit champ magnétique, ledit générateur thermique (10-14) comportant également des moyens de modulation magnétique (Mj, mj) agencés pour faire varier le champ magnétique reçu par ledit élément thermique (Ti) et des moyens de récupération d'au moins une partie des thermies générées par ledit élément thermique (Ti) soumis à ce champ magnétique variable, **caractérisé en ce que** lesdits moyens de modulation magnétique comportent au moins un élément de modulation magnétique (Mj, mj), magnétiquement conducteur, couplé à des moyens de déplacement agencés pour le déplacer alternativement par rapport audit élément magnétique (Gi) et audit élément thermique (Ti), entre une position active dans laquelle il est rapproché dudit élément magnétique (Gi) et dudit élément thermique (Ti) et agencé pour canaliser au moins ladite partie dudit champ magnétique destinée à être reçue par ledit élément thermique (Ti) et une position inactive dans laquelle il est éloigné dudit élément magnétique (Gi) et/ou dudit élément thermique (Ti) et agencé pour être sans effet sur cette partie de champ magnétique.

2. Générateur thermique (10, 11, 12, 14) selon la revendication 1, **caractérisé en ce que** ledit élément de modulation magnétique est un élément de convergence magnétique (Mj) réalisé dans un matériau présentant une conductivité magnétique supérieure à celle existant dans le milieu ambiant séparant ledit élément magnétique (Gi) et ledit élément thermique (Ti) et **en ce que** ledit élément de convergence magnétique (Mj) est agencé pour, en position active, favoriser le passage dudit champ magnétique en direction dudit élément thermique (Ti) ayant pour effet d'augmenter le champ magnétique le traversant.

3. Générateur thermique (10, 12, 13) selon la revendication 1, **caractérisé en ce que** ledit élément de modulation magnétique est un élément de divergence magnétique (mj) réalisé dans un matériau présentant une conductivité magnétique supérieure à celle dudit élément thermique (Ti), **en ce que** ledit élément de divergence magnétique (mj) ayant au moins une forme apte à contourner ledit élément thermique (Ti) et agencée pour, en position active, dévier au moins une partie dudit champ magnétique dudit élément thermique (Ti) ayant pour effet de diminuer le champ magnétique le traversant.

4. Générateur thermique (10-14) selon la revendication 1, **caractérisé en ce que** ledit élément de modulation magnétique (Mj, mj) est avantageusement réalisé au moins dans l'un des matériaux choisis dans le groupe comprenant le fer doux, les ferrites, les alliages de fer, de chrome, de vanadium, les composites, les nano-composants, les permalloys.

5. Générateur thermique (10, 12) selon les revendications 2 et 3, **caractérisé en ce qu'**il comporte au moins un élément de convergence magnétique (Mj) et au moins un élément de divergence magnétique (mj), agencés pour permettre alternativement de favoriser le passage du champ magnétique en direction dudit élément thermique (Ti) et de dévier ledit champ magnétique dudit élément thermique (Ti).

6. Générateur thermique (10, 11, 12, 14) selon la revendication 1, **caractérisé en ce qu'**au moins en position active, ledit élément de modulation magnétique (Mj, mj) est interposé entre ledit élément magnétique (Gi) et ledit élément thermique (Ti).

7. Générateur thermique (10-14) selon la revendication 1, **caractérisé en ce que** ledit élément magnétique (Gi) comporte au moins une borne magnétique positive (40) et au moins une borne magnétique négative (41), **en ce que** ledit élément thermique (Ti) est disposé entre lesdites bornes magnétiques (40, 41) et **en ce qu'**au moins en position active, ledit élément de modulation magnétique (Mj, mj) est interposé entre au moins desdites bornes magnétiques (40, 41).

8. Générateur thermique (10, 11, 12, 14) selon les revendications 2, 6 et 7, **caractérisé en ce que** ledit élément de convergence magnétique (Mj) comporte deux pastilles de convergence (50) placées, en position active, de part et d'autre dudit élément thermique (Ti) entre ledit élément thermique (Ti) et lesdites bornes magnétiques (40, 41).

9. Générateur thermique (10, 12, 14) selon les revendications 3, 6 et 7, **caractérisé en ce que** ledit élément de divergence magnétique (mj) présente une forme (51) en U ou en C sans limitation de forme destinée à chevaucher, au moins en position active, ledit élément de thermique (Ti) entre ledit élément thermique (Ti) et lesdites bornes magnétiques (40, 41).

10. Générateur thermique (13) selon les revendications 3 et 7, **caractérisé en ce que** ledit élément de divergence magnétique (mj) comporte au moins un plot (500) destiné à être disposé, en position active, de manière tangente aux-dits éléments thermique (Ti) et aux-dites bornes magnétiques (40, 41), l'entrefer (E) séparant ledit élément thermique (Ti) desdites bornes magnétiques (40, 41) restant libre.

11. Générateur thermique (13) selon la revendication 10, **caractérisé en ce que** ledit entrefer (E) est compris entre 0 mm et 50 mm et de préférence inférieur à 1 mm.

12. Générateur thermique (10-14) selon la revendication 8 ou 9, **caractérisé en ce que** ledit élément magnétique (Gi) présente une forme en U ou en C sans limitation de forme destinée à chevaucher ledit élément de modulation magnétique (Mj, mj).

13. Générateur thermique (10-14) selon la revendication 1, **caractérisé en ce que** lesdits moyens de déplacement sont agencés pour entraîner ledit élément de modulation magnétique (Mj, mj) selon au moins l'un des déplacements choisi dans le groupe comprenant la rotation continue, la rotation pas à pas, le pivotement alternatif, la translation continue, la translation pas à pas, la translation alternative, une combinaison de ces déplacements.

14. Générateur thermique (10-14) selon la revendication 11, **caractérisé en ce que** lesdits moyens de déplacement sont couplés à des moyens d'actionnement choisis dans le groupe comprenant un moteur, un vérin, un mécanisme à ressort, un aérogénérateur, un électroaimant, un hydrogénérateur, un mécanisme à force musculaire.

15. Générateur thermique (10-14) selon la revendication 1, **caractérisé en ce que** ledit élément de modulation magnétique (Mj, mj) est porté par un support (52a-f) couplé aux-dits moyens de déplacement et réalisé dans un matériau magnétiquement isolant choisi dans le groupe comprenant les matériaux synthétiques, le laiton, le bronze, les aluminiums, les céramiques.

16. Générateur thermique (10-14) selon la revendication 14, **caractérisé en ce qu'**il comporte au moins un ensemble d'éléments magnétiques (Gi), un ensemble d'éléments thermiques (Ti) chacun destiné à être soumis au champ magnétique d'au moins un desdits éléments magnétiques (Gi), un ensemble d'éléments de modulation magnétique (Mj, mj) portés par un support (52a-f) couplé aux-dits moyens de déplacement et agencé pour déplacer simultanément lesdits éléments de modulation magnétique (Mj, mj) pour que chacun soit, par rapport à un élément thermique (Ti) et à un élément magnétique (Gi) donnés, alternativement en position active et en position inactive.

17. Générateur thermique (10-13) selon les revendications 7 et 15, **caractérisé en ce que** ledit support comporte au moins un plateau (52a-d, 52f) sensiblement circulaire, mobile en rotation autour de son axe, **en ce que** lesdits éléments thermiques (Ti) sont disposés en anneau et **en ce que** lesdits éléments magnétiques (Gi) forment au moins une paire de couronnes définissant lesdites bornes magnétiques positive (40) et négative (41).

18. Générateur thermique (10-12) selon la revendication 17, **caractérisé en ce que** ledit plateau (52a-d) est pourvu d'une gorge (54a-d) définissant l'intervalle séparant lesdites pastilles de convergence (51) desdits éléments de convergence magnétique (Mj) entre-elles et/ou l'ouverture de ladite forme en U ou en C (51) desdits éléments de divergence magnétique (mj).

19. Générateur thermique (10, 11) selon la revendication 18, **caractérisé en ce que** ladite gorge (54a, 54b) est disposée axialement et sensiblement parallèlement à l'axe dudit plateau (52a, 52b).

20. Générateur thermique (12) selon la revendication 16, **caractérisé en ce** ladite gorge (54c, 54d) est disposée radialement et sensiblement perpendiculairement à l'axe dudit plateau (52c, 52d).

21. Générateur thermique (14) selon les revendications 7 et 15, **caractérisé en ce que** ledit support comporte au moins une barre (52e) sensiblement rectiligne, mobile en translation, **en ce que** lesdits éléments thermiques (Ti) sont disposés selon au moins une ligne portée par une traverse (70) et **en ce que** lesdits éléments magnétiques (Gi) forment au moins une paire de rangées définissant lesdites bornes magnétiques positive (40) et négative (41).

22. Générateur thermique (14) selon la revendication 21, **caractérisé en ce que** lesdits éléments thermiques (Ti) sont disposés selon deux lignes sensiblement parallèles portées par deux traverses (70) reliées et définissant un cadre (72).

23. Générateur thermique selon la revendication 16, **caractérisé en ce que** lesdits éléments magnétiques sont formés d'une pièce unique.

24. Générateur thermique (10-14) selon la revendication 1, **caractérisé en ce que** ledit élément magnétique est choisi dans le groupe comprenant un assemblage magnétique, un aimant permanent, un électro-aimant, un aimant supraconducteur, un électro-aimant supra-conducteur, un supra-conducteur.

25. Générateur thermique (10-14) selon la revendication 1, **caractérisé en ce que** ledit élément magnétique (Gi) et ledit élément thermique (Ti) sont fixes et seul l'élément de modulation magnétique (Mj, mj) est mobile.

26. Générateur thermique (10-14) selon la revendication 1, **caractérisé en ce que** lesdits moyens de récupération comportent au moins l'un des éléments choisi dans le groupe comprenant un circuit de transport contenant un fluide caloporteur, des moyens de circulation de ce fluide caloporteur, un échangeur thermique.

27. Procédé de génération de thermies au cours duquel on crée un champs magnétique avec au moins un élément magnétique (Gi), on soumet au moins un élément thermique (Ti) réalisé en matériau magnéto-calorique à au moins une partie dudit champ magnétique, on module avec des moyens de modulation magnétique (Mj, mj) ledit champ magnétique reçu par ledit élément thermique (Ti) et on récupère au moins une partie des thermies générées par ledit élément thermique (Ti) soumis à ce magnétique variable, **caractérisé en ce que** pour faire varier ledit champ magnétique reçu par ledit élément thermique (Ti), on utilise au moins un élément de modulation magnétique (Mj, mj), magnétiquement conducteur, que l'on déplace entre au moins une position active dans laquelle il est rapproché dudit élément magnétique (Gi) et dudit élément thermique (Ti) et agencé pour canaliser au moins ladite partie dudit champ magnétique destinée à être reçue par ledit élément thermique (Ti) et une position inactive dans laquelle il est éloigné dudit élément magnétique (Gi) et/ou dudit élément thermique (Ti) et agencé pour ne pas canaliser cette partie de champ magnétique.

28. Procédé selon la revendication 27, **caractérisé en ce que** l'on utilise au moins un élément magnétique (Gi) définissant au moins une borne positive (40) et une borne négative (41) entre lesquelles on dispose ledit élément thermique (Ti) et **en ce qu'**en position active, on interpose ledit élément de modulation magnétique (Mj, mj) entre au moins lesdites bornes magnétiques (40, 41) dudit élément magnétique (Gi).

## Claims

1. A heat generator (10-14) with magneto-caloric material comprising at least one thermal element (Ti), at least one magnetic element (Gi) for generating a magnetic field, said thermal element (Ti) being located opposite said magnetic element (Gi) so it can be subjected to at least one portion of said magnetic field, said heat generator (10-14) also comprising magnetic modulation means (Mj, mj) for varying the magnetic field received by said thermal element (Ti) and a means for recovering at least a portion of the thermies generated by said thermal element (Ti) subject to this variable magnetic field, **characterized in that** said magnetic modulation means comprises at least one magnetic modulation element (Mj, mj) that is magnetically conductive, coupled with a displacement means for alternately displacing it relative to said magnetic element (Gi) and to said thermal element (Ti) between an active position in which it is close to said magnetic element (Gi) and said thermal element (Ti) and channels at least the portion of said magnetic field that will be received by said thermal element (Ti), and an inactive position in which it is distanced from said magnetic element (Gi) and/or said thermal element (Ti) and has no effect on this portion of the magnetic field.

2. A heat generator (10, 11, 12, 14) according to claim 1, **characterized in that** said magnetic modulation element is a magnetic convergence element (Mj) made of a material with higher magnetic conductivity than the conductivity that exists in the ambient milieu separating said magnetic element (Gi) and said thermal element (Ti) and **in that** said magnetic convergence element (Mj), when in the active position, promotes the passage of said magnetic field toward said thermal element (Ti), resulting in an increase in the magnetic field crossing it.

3. A heat generator (10, 12, 13) according to claim 1, **characterized in that** said magnetic modulation element is a magnetic divergence element (mj) made of a material with higher magnetic conductivity than said thermal element (Ti), **in that** said magnetic divergence element (mj) has at least one shape that can bypass said thermal element (Ti) and designed so that in the active position, it deflects at least one portion of said magnetic field from said thermal element (Ti), thereby weakening the magnetic field that crosses it.

4. A heat generator (10-14) according to claim 1, **characterized in that** said magnetic modulation element (Mj, mj) is advantageously made of at least one of the materials selected from the group comprising soft iron, ferrites, iron alloys, chromium, vanadium, composites, nano-composites, permalloys.

5. A heat generator (10, 12) according to claims 2 and 3, **characterized in that** it comprises at least one magnetic convergence element (Mj) and at least one magnetic divergence element (mj) for alternately promoting passage of the magnetic field toward said thermal element (Ti) and deflecting said magnetic field from said thermal element (Ti).

6. A heat generator (10, 11, 12,14) according to claim 1, **characterized in that**, at least in the active position, said magnetic modulation element (Mj, mj) is interposed between said magnetic element (Gi) and said thermal element (Ti).

7. A heat generator (10-14) according to claim 1, **characterized in that** said magnetic element (Gi) comprises at least one positive magnetic terminal (40) and at least one negative magnetic terminal (41), **in that** said thermal element (Ti) is located between said magnetic terminals (40, 41) and **in that**, at least in the active position, said magnetic modulation element (Mj, mj) is interposed between at least said magnetic terminals (40, 41).

8. A heat generator (10, 11, 12, 14) according to claims 2, 6 and 7, **characterized in that** said magnetic convergence element (Mj) comprises two convergence pellets (50) placed, when in the active position, on either side of said thermal element (Ti) between said thermal element (Ti) and said magnetic terminals (40, 41).

9. A heat generator (10, 12, 14) according to claims 3, 6 and 7, **characterized in that** said magnetic divergence element (mj) has a U-shape or C-shape (51), without shape limitation, designed to overlap, at least in the active position, said thermal element (Ti) between said thermal element (Ti) and said magnetic terminals (40, 41).

10. A heat generator (13) according to claims 3 and 7, **characterized in that** said magnetic divergence element (mj) comprises at least one contact (500) which is located, when in the active position, tangential to said thermal elements (Ti) and to said magnetic terminals (40,41), with air-gap (E) which separates said thermal element (Ti) from said magnetic terminals (40, 41) remaining fee.

11. A heat generator (13) according to claim 10, **characterized in that** said air-gap (E) ranges from 0 mm to 50 mm and is preferably less than 1 mm.

12. A heat generator (10-14) according to claims 8 or 9, **characterized in that** said magnetic element (Gi) is U-shaped or C-shaped with no limitation in shape and designed to overlap said magnetic modulation element (Mj, mj).

13. A heat generator (10-14) according to claim 1, **characterized in that** said displacement means is designed to drive said magnetic modulation element (Mj, mj) in at least one of the displacement modes selected from the group comprising continuous rotation, stepping rotation, alternate pivoting, continuous translation, stepping translation, alternate translation, or a combination of these displacement modes.

14. A heat generator (10-14) according to claim 11, **characterized in that** said displacement means is coupled with an actuation means selected from the group consisting of a motor, a cylinder, a spring mechanism, an aerogenerator, an electromagnet, a hydrogenerator, or a manual mechanism.

15. A heat generator (10-14) according to claim 1, **characterized in that** said magnetic modulation element (Mj, mj) is held by a support (52a-f) coupled with said displacement means and made of magnetically insulating material selected from the group consisting of synthetic materials, brass, bronze, aluminum, or ceramic.

16. A heat generator (10-14) according to claim 14, **characterized in that** it comprises at least one unit of magnetic elements (Gi); one unit of thermal elements (Ti), each of which is designed to be subjected to the magnetic field from at least one of said magnetic elements (Gi); and one unit of magnetic modulation elements (Mj, mj) held by a support (52a-f) coupled with said displacement means and designed to simultaneously displace said magnetic modulation elements (Mj, mj) so that each one of them is alternately in an active and an inactive position relative to a given thermal element (Ti) and a given magnetic element (Gi).

17. A heat generator (10 -13) according to claims 7 and 15, **characterized in that** said support comprises at least one generally circular platform (52a-d, 52f) rotationally movable about its axis, **in that** said thermal elements (Ti) are arranged in a ring, and **in that** said magnetic elements (Gi) form at least one pair of rims defining said positive magnetic terminals (40) and negative magnetic terminals (41).

18. A heat generator (10-12) according to claim 17, **characterized in that** said platform (52a-d) is equipped with a groove (54a-d) defining the interval separating said convergence pellets (51) on said magnetic convergence elements (Mj) from one another and/or from the opening in said U-shaped or C-shaped portion (51) of said magnetic divergence elements (mj).

19. A heat generator (10, 11) according to claim 18, **characterized in that** said groove (54a, 54b) is disposed so as to be axial and essentially parallel to the axis of said platform (52a, 52b).

20. A heat generator (12) according to claim 16, **characterized in that** said groove (54c, 54d) is disposed so as to be radial and essentially perpendicular to the axis of said platform (52c, 52d).

21. A heat generator (14) according to claims 7 and 15, **characterized in that** said support comprises at least one generally rectilinear, translationally movable bar (52e), **in that** said thermal elements (Ti) are disposed along at least one line supported by a cross piece (70), and **in that** said magnetic elements (Gi) form at least one pair of rows defining said positive magnetic terminals (40) and negative magnetic terminals (41).

22. A heat generator (14) according to claim 21, **characterized in that** said thermal elements (Ti) are disposed along two generally parallel lines supported by two connected cross pieces (70) defining a frame (72).

23. A heat generator according to claim 16, **characterized in that** said magnetic elements are formed of one single piece.

24. A heat generator (10-14) according to claim 1, **characterized in that** said magnetic element is selected from the group comprising a magnetic assembly, a permanent magnet, an electromagnet, a superconductive magnet, a superconductive electromagnet, a superconductor.

25. A heat generator (10-14) according to claim 1, **characterized in that** said magnetic element (Gi) and said thermal element (Ti) are fixed and only the magnetic modulation element (Mj, mj) is movable.

26. A heat generator (10-14) according to claim 1, **characterized in that** said recovery means comprises at least one of the elements selected from the group comprising a transport circuit containing a heat-transmitting fluid, a circulation means for said heat-transmitting fluid, a heat exchanger.

27. A method of generating thermies in the course of which a magnetic field is created with at least one magnetic element (Gi), at least one thermal element (Ti) made of magneto-caloric material is subjected to at least one portion of said magnetic field, a magnetic modulation means (Mj, mj) is used to modulate said magnetic field received by said thermal element (Ti) and at least a portion of the thermies generated by said thermal element (Ti) subjected to said variable magnetic field is recovered, **characterized in that** in order to vary said magnetic field received by said thermal element (Ti), at least one magnetically-conductive magnetic modulation element (Mj, mj) is used, which is displaced between at least one active position wherein it is close to said magnetic element (Gi) and said thermal element (Ti) and channels at least said portion of the magnetic field that will be received by said thermal element (Ti), and an inactive position wherein it is distanced from said magnetic element (Gi) and/or said thermal element (Ti) so that it does not channel this portion of the magnetic field.

28. A method according to claim 27, **characterized in that** at least one magnetic element (Gi) is used, defming at least one positive terminal (40) and one negative terminal (41) between which said thermal element (Ti) is located, and **in that** in the active position, said magnetic modulation element (Mj, mj) is interposed between at least said magnetic terminals (40, 41) on said magnetic element (Gi).

## Patentansprüche

1. Thermogenerator (10-14) aus magnetokalorischem Werkstoff, der mindestens ein Thermoelement (Ti) und mindestens ein Magnetelement (Gi) aufweist, welches zur Erzeugung eines Magnetfeldes bestimmt ist, wobei das Thermoelement (Ti) dem Magnetelement (Gi) so gegenüberliegend angeordnet ist, dass es mindestens einem Teil des Magnetfeldes ausgesetzt werden kann, wobei der Thermogenerator (10-14) außerdem Einrichtungen (Mj,mj) zur magnetischen Modulation, die angeordnet sind, um das durch das Thermoelement (Ti) empfangene Magnetfeld zur Veränderung zu veranlassen, und Einrichtungen zur Rückgewinnung mindestens eines Teils der durch das Thermoelement (Ti), welches dem veränderbaren Magnetfeld ausgesetzt wird, erzeugten 1000 Kilokalorien aufweist, **dadurch gekennzeichnet, dass** die Einrichtungen zur magnetischen Modulation mindestens ein magnetisches Modulationselement (Mj,mj) umfassen, welches magnetisch leitend ist, welches mit Verlagerungseinrichtungen verbunden ist, die angeordnet sind, um es wechselweise im Verhältnis zu dem Magnetelement (Gi) und dem Thermoelement (Ti) zwischen einer aktiven Position, in der es an das Magnetelement (Gi) und das Thermoelement (Ti) angenähert ist und einer inaktiven Position zu verlagern, in der es von dem Magnetelement (Gi) und/oder von dem Thermoelement (Ti) entfernt ist, zu verlagern und angeordnet ist, um mindestens den Teil des Magnetfeldes zu kanalisieren, der dazu bestimmt ist, von dem Thermoelement (Ti) empfangen zu werden, und angeordnet ist, um ohne Wirkung auf diesen Teil des Magnetfeldes zu sein.

2. Thermogenerator (10,11,12,14) nach Anspruch 1, **dadurch gekennzeichnet, dass** das magnetische Modulationselement ein Magnetkonvergenzelement (Mj) ist, welches aus einem Werkstoff hergestellt ist, der eine magnetische Leitfähigkeit aufweist, die höher als diejenige ist, die in dem Umfeld vorhanden ist, die das Magnetelement (Gi) und das Thermoelement (Ti) voneinander trennt, und wobei das Magnetkonvergenzelement (Mj) angeordnet ist, um in der aktiven Position den Durchgang des Magnetfeldes in Richtung des Thermoelementes (Ti) zu begünstigen, was eine Erhöhung des Magnetfeldes bewirkt, welches dasselbe durchquert.

3. Thermogenerator (10,12,13) nach Anspruch 1, **dadurch gekennzeichnet, dass** das magnetische Modulationselement ein Magnetdivergenzelement (mj) ist, welches aus einem Werkstoff hergestellt ist, der eine magnetische Leitfähigkeit aufweist, die höher als diejenige des Thermoelementes (Ti) ist, wobei das Magnetdivergenzelement (mj) mindestens eine Form aufweist, die zur Umgehung des Thermoelementes (Ti) in der Lage ist, und angeordnet ist, um in der aktiven Position mindestens einen Teil des Magnetfeldes des Thermoelementes (Ti) umzuleiten, was eine Verringerung des Magnetfeldes bewirkt, welches dasselbe durchquert.

4. Thermogenerator (10-14) nach Anspruch 1, **dadurch gekennzeichnet, dass** das magnetische Modulationselement (Mj,mj) vorteilhafterweise mindestens aus einem Werkstoff hergestellt ist, der aus der aus Weicheisen, Ferriten, Eisenlegierungen, Chrom, Vanadium, Verbundstoffen, Nanokomponenten, Permalloys umfassenden Gruppe ausgewählt wird.

5. Thermogenerator (10,12) nach den Ansprüchen 2 und 3, **dadurch gekennzeichnet, dass** es mindestens ein Magnetkonvergenzelement (Mj) und mindestens ein Magnetdivergenzelement (mj) aufweist, die angeordnet sind, um wechselweise den Durchgang des Magnetfeldes in Richtung des Thermoelementes (Ti) zu begünstigen und das Magnetfeld von dem Thermoelement (Ti) umzuleiten.

6. Thermogenerator (10,11,12,14) nach Anspruch 1, **dadurch gekennzeichnet, dass** das magnetische Modulationselement (Mj,mj) mindestens in der aktiven Position zwischen dem Magnetelement (Gi) und dem Thermoelement (Ti) positioniert ist.

7. Thermogenerator (10-14) nach Anspruch 1, **dadurch gekennzeichnet, dass** das Magnetelement (Gi) mindestens eine positive magnetische Klemme (40) und mindestens eine negative magnetische Klemme (41) aufweist, wobei das Thermoelement (Ti) zwischen den magnetischen Klemmen (40,41) angeordnet ist, und dass das magnetische Modulationselement (Mj,mj) mindestens in der aktiven Position zwischen mindestens den magnetischen Klemmen (40,41) positioniert ist.

8. Thermogenerator (10,11,12,14) nach den Ansprüchen 2, 6 und 7, **dadurch gekennzeichnet, dass** das Magnetkonvergenzelement (Mj) zwei Konvergenzpastillen (50) aufweist, die in der aktiven Position beiderseits des Thermoelementes (Ti) zwischen dem Thermoelement (Ti) und den magnetischen Klemmen (40,41) positioniert sind.

9. Thermogenerator (10,12,14) nach den Ansprüchen 3, 6 und 7, **dadurch gekennzeichnet, dass** das Magnetdivergenzelement (mj) eine U- oder C-Form (51) ohne Formbegrenzung aufweist, die dazu bestimmt ist, mindestens in der aktiven Position das Thermoelement (Ti) zwischen dem Thermoelement (Ti) und den magnetischen Klemmen (40,41) zu überlappen.

10. Thermogenerator (13) nach den Ansprüchen 3 und 7, **dadurch gekennzeichnet, dass** das Magnetdivergenzelement (mj) mindestens ein Kontaktstück (500) aufweist, welches dazu bestimmt ist, in der aktiven Position tangential zu den Thermoelementen (Ti) und den magnetischen Klemmen (40,41) angeordnet zu sein, wobei der Luftspalt (E), der das Thermoelement (Ti) und die magnetischen Klemmen (40,41) trennt, frei bleibt.

11. Thermogenerator (13) nach Anspruch 10, **dadurch gekennzeichnet, dass** der Luftspalt (E) zwischen einschließlich 0 mm und 50 mm, und vorzugsweise unter 1 mm beträgt.

12. Thermogenerator (10-14) nach Anspruch 8 oder 9, **dadurch gekennzeichnet, dass** das Magnetelement (mj) eine U- oder C-Form ohne Formbegrenzung aufweist, die dazu bestimmt ist, das magnetische Modulationselement (Mj,mj) zu überlappen.

13. Thermogenerator (10-14) nach Anspruch 1, **dadurch gekennzeichnet, dass** die Verlagerungseinrichtungen angeordnet sind, um das magnetische Modulationselement (Mj,mj) entsprechend mindestens einer Verlagerung anzutreiben, die aus der Gruppe ausgewählt wird, welche die ununterbrochene Drehung, die schrittweise Drehung, die wechselweise Drehung, die ununterbrochene Translation, die schrittweise Translation, die wechselweise Translation, eine Kombination dieser Verlagerungen umfasst.

14. Thermogenerator (10-14) nach Anspruch 11, **dadurch gekennzeichnet, dass** die Verlagerungseinrichtungen mit Betätigungseinrichtungen verbunden sind, die aus der Gruppe ausgewählt werden, die einen Motor, einen Zylinder, einen Federmechanismus, eine Windkraftanlage, ein Elektromagnet, ein Wasserstofferzeuger und einen muskelkraftbetriebenen Mechanismus umfasst.

15. Thermogenerator (10-14) nach Anspruch 1, **dadurch gekennzeichnet, dass** das magnetische Modulationselement (Mj,mj) durch einen Träger (52a-f) getragen wird, der mit den Verlagerungseinrichtungen verbunden und aus einem magnetisch isolierenden Werkstoff hergestellt ist, der aus der Gruppe ausgewählt wird, welche die Kunststoffe, Messing, Bronze, die Aluminiumarten und die Keramikarten umfasst.

16. Thermogenerator (10-14) nach Anspruch 14, **dadurch gekennzeichnet, dass** er mindestens eine Gesamtheit von Magnetelementen (Gi) und eine Gesamtheit von Thermoelementen (Ti) aufweist, die jeweils dazu bestimmt sind, einem Magnetfeld mindestens eines der Magnetelemente (Gi) ausgesetzt zu werden, sowie eine Gesamtheit von magnetischen Modulationselementen (Mj,mj), die durch einen Träger (52a-f) getragen sind, der mit den Verlagerungseinrichtungen verbunden und zur gleichzeitigen Verlagerung der magnetischen Modulationselemente (Mj,mj) angeordnet ist, damit sich jeder im Verhältnis zu einem gegebenen Thermoelement (Ti) und einem gegebenen Magnetelement (Gi) wechselweise in der aktiven Position und in der inaktiven Position befindet.

17. Thermogenerator (10-13) nach den Ansprüchen 7 und 15, **dadurch gekennzeichnet, dass** der Träger mindestens eine praktisch kreisförmige Platte (52a-d,52f) umfasst, die um ihre Achse drehbar ist, wobei die Thermoelemente (Ti) ringförmig angeordnet sind, und wobei die Magnetelemente (Gi) mindestens ein Paar von Kronen ausbilden, welche die positiven (40) und negativen (41) magnetischen Klemmen festlegen.

18. Thermogenerator (10-12) nach Anspruch 17, **dadurch gekennzeichnet, dass** die Platte (52a-d) mit einer Rinne (54a-d) versehen ist, die den Abstand der Konvergenzpastillen (51) der Magnetkonvergenzelemente (Mj) untereinander und/oder die Öffnung der U- oder C-Form (51) der Magnetdivergenzelemente (mj) festlegt.

19. Thermogenerator (10,11) nach Anspruch 18, **dadurch gekennzeichnet, dass** die Rinne (54a,54b) axial und praktisch parallel zu der Achse der Platte (52a,52b) angeordnet ist.

20. Thermogenerator (12) nach Anspruch 16, **dadurch gekennzeichnet, dass** die Rinne (54c,54d) radial und praktisch senkrecht zu der Achse der Platte (52c,52d) angeordnet ist.

21. Thermogenerator (14) nach den Ansprüchen 7 und 15, **dadurch gekennzeichnet , dass** der Träger mindestens einen praktisch geradlinigen Stab (52e) aufweist, der in Form einer Translation bewegbar ist, wobei die Thermoelemente (Ti) entsprechend mindestens einer Linie angeordnet sind, die durch eine Traverse (70) getragen ist, und wobei die Magnetelemente (Gi) mindestens ein Paar von Reihen ausbilden, welche die positiven (40) und negativen (41) magnetischen Klemmen festlegen.

22. Thermogenerator (14) nach Anspruch 21, **dadurch gekennzeichnet, dass** die Thermoelemente (Ti) entsprechend zwei praktisch paralleler Linien angeordnet sind, die durch zwei miteinander verbundene Traversen (70) getragen sind, und die einen Rahmen (72) festlegen.

23. Thermogenerator nach Anspruch 16, **dadurch gekennzeichnet, dass** die Magnetelemente aus einem einzigen Stück ausgebildet sind.

24. Thermogenerator (10-14) nach Anspruch 1, **dadurch gekennzeichnet, dass** das Magnetelement aus der Gruppe ausgewählt wird, die eine Magnetanordnung, einen Dauermagneten, einen Elektromagneten, einen Supraleitermagneten, einen Elektrosupraleitermagneten und einen Supraleiter umfasst.

25. Thermogenerator (10-14) nach Anspruch 1, **dadurch gekennzeichnet, dass** der Magnetelement (Gi) und das Thermoelement (Ti) feststehend sind und nur das magnetische Modulationselement (Mj,mj) beweglich ist.

26. Thermogenerator (10-14) nach Anspruch 1, **dadurch gekennzeichnet, dass** die Rückgewinnungseinrichtungen mindestens eines der Elemente umfassen, die aus der Gruppe ausgewählt werden, die einen Transportkreislauf, der ein Wärmeübertragungsfluid enthält, Einrichtungen zur Zirkulation dieses Wärmeübertragungsfluids und einen Wärmetauscher umfasst.

27. Verfahren zur Erzeugung von 1000 Kilokalorien, während dem ein Magnetfeld mit mindestens einem Magnetelement (Gi) erzeugt wird, während dem mindestens ein Thermoelement (Ti), welches aus magnetokalorischem Werkstoff hergestellt ist, mindestens einem Teil des Magnetfeldes ausgesetzt wird, während dem das durch das Thermoelement (Ti) empfangene Magnetfeld mit magnetischen Modulationseinrichtungen (Mj,mj) moduliert, und mindestens ein Teil der durch das Thermoelement (Ti) erzeugten 1000 Kilokalorien wiedergewonnen wird, welches diesem veränderlichen Magnetfeld ausgesetzt wird, **dadurch gekennzeichnet, dass** um das durch das Thermoelement (Ti) empfangene Magnetfeld zur Veränderung zu veranlassen mindestens ein magnetisch leitendes magnetisches Modulationselement (Mj,mj) verwendet wird, welches zwischen mindestens einer aktiven Position, in der es an das Magnetelement (Gi) und das Thermoelement (Ti) angenähert ist und einer inaktiven Position, in der es von dem Magnetelement (Gi) und/oder von dem Thermoelement (Ti) entfernt ist und angeordnet ist, verlagert wird und angeordnet ist, um mindestens den Teil des Magnetfeldes zu kanalisieren, der dazu bestimmt ist, von dem Thermoelement (Ti) empfangen zu werden, um diesen Teil des Magnetfeldes nicht zu kanalisieren.

28. Verfahren nach Anspruch 27, **dadurch gekennzeichnet, dass** mindestens ein Magnetelement (Gi) verwendet wird, welches mindestens eine positive Klemme (40) und eine negative Klemme (41) festlegt, zwischen denen das Thermoelement (Ti) angeordnet wird, und wobei das magnetische Modulationselement (Mj,mj) in der aktiven Position zwischen mindestens den magnetischen Klemmen (40,41) des Magnetelementes (Gi) positioniert wird.
